# EUROPÄISCHE PATENTANMELDUNG

(11) **EP 4 636 584 A1**
(43) Veröffentlichungstag der Anmeldung: **22.10.2025**
(21) Anmeldenummer: 24171349.4
(22) Anmeldetag: 19.04.2024
(51) Int. Cl.: G06F 9/445, G06F 9/455, G06F 9/50

(54) **SYSTEM UND COMPUTER-IMPLEMENTIERTES VERFAHREN ZUR UMGEBUNGSSPEZIFISCHEN KONFIGURATION EINER CONTAINERINSTANZ**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung betrifft ein System und Computer-implementiertes Verfahren zur Umgebungsspezifischen Konfiguration einer Containerinstanz (CI), umfassend die Schritte: durchgeführt von einer zentrale Verwaltungsvorrichtung (10), die Laufzeitumgebungen auf einem Cluster aus mindestens einem Gastrechner (20) verwaltet,
- Empfangen (S1) einer Bereitstellungskonfiguration (BC) für die Containerinstanz (CI), die Laufzeitumgebungsparameter (LP) abhängige Konfigurationsabschnitte umfasst,
beim Start der Containerinstanz (CI), die aus der Bereitstellungskonfiguration (BC) und einem zugeordneten Containerimage auf einer Laufzeitumgebung (21) in einem ersten Gastrechner des Clusters erstellt wird:
- Ermitteln (S2) einer aktuellen Umgebungs-Laufzeitkonfiguration (aULC), die abhängig von allen weiteren Containerinstanzen, die bereits auf dem ersten Gastrechner und/oder auf einem der anderen Gastrechnern des Clusters ausgeführt werden, ausgebildet ist und/oder abhängig von Umgebungseinstellungen des Clusters ausgebildet ist,
- Ermitteln (S3) von mindestens einem Satz an resultierenden Laufzeitumgebungsparametern (rLP) durch Abgleich der aktuellen Umgebungs-Laufzeitkonfiguration (aULC) mit einer Umgebungsrichtlinie (UR),
- Erzeugen (S4) einer aktualisierten Bereitstellungsinformation (aBC) durch aktualisieren der Bereitstellungsinformation (BC) abhängig von dem resultierenden Laufzeitumgebungsparametersatz (rLP),
durch den ersten Gastrechner,
- Aktivieren (S5) von Konfigurationsabschnitten der Containerinstanz (CI) entsprechend der aktualisierten Bereitstellungsinformation (aBC).

## Beschreibung

### Technisches Gebiet

Die Erfindung betrifft ein Computer-implementiertes Verfahren zur Umgebungs-spezifischen Konfiguration einer Containerinstanz, durchgeführt von einer zentralen Verwaltungsvorrichtung, die Laufzeitumgebungen auf einem Cluster aus Gastrechnern verwaltet, sowie ein System, das derart konfiguriert ist das Verfahren auszuführen und ein entsprechendes Computerprogrammprodukt.

### Technischer Hintergrund

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardwareressourcen des darunterliegenden Systems zugewiesen bekommen und über einen eigenen Betriebssystemkern verfügen, eine ressourcenschonende Art der Virtualisierung dar und kapseln eine in einem Container betriebene Softwarekomponente vom darunterliegenden Gastrechner ab.

Um einen Container auf dem Gastrechner starten zu können, wird ein Containerimage benötigt, welches neben der Softwarekomponente - der eigentlich auszuführenden Anwendung - auch die für die Softwarekomponente erforderlichen Binärprogramme und Bibliotheken enthält. Aus dem Containerimage wird mit Hilfe einer Deployment-Konfiguration, im Weiteren auch als Bereitstellungsinformation bezeichnet, auf dem Gastrechner eine Containerinstanz erstellt und auf der Laufzeitumgebung des Gastrechners ausgeführt.

Eine orchestrierte Laufzeitumgebung umfasst einen Orchestrator, bevorzugt ausgebildet durch eine Orchestrierungssoftware, die auf einem Computer ausgeführt wird, und mindestens einen Gastrechner, häufig eine Vielzahl von Gastrechnern, die dem Orchestrator zugeordnet sind. Der Orchestrator startet, verwaltet und beendet Containerinstanzen auf den zugeordneten Gastrechnern, die auch als Cluster bezeichnet werden. Typische orchestrierte Laufzeitumgebungen sind hierbei Kubernetes-basierte Containerumgebungen, die beispielsweise Cloud-basierte Container-as-a-Services-Umgebungen oder in einer Cloud betriebene virtuelle Instanzen als Knoten einer orchestrierten Laufzeitumgebung verwalten.

In der Deployment-Konfiguration werden mindestens ein Containerimage referenziert, Prozess-Privilegien der Containerinstanz zugeordnet und optional Anwendungs-spezifische Konfigurationseinstellungen zugewiesen. Hierdurch wird die eigentliche Anwendung konfiguriert.

Container-Laufzeitumgebungen, die beispielsweise in einer Cloud oder in einem Rechenzentrum betrieben werden, können in unterschiedlich abgesicherten Umgebungen betrieben werden. Einfluss auf ein mögliches Schadensrisiko für die auf der Laufzeitumgebung betriebene Containerinstanz kann hierbei die Absicherung der Ausführungsumgebung, beispielsweise durch Verwendung von Firewalls für den Orchestrator oder die Gastrechner haben. Auch die auf der Plattform möglichen zuweisbaren oder tatsächlich zugewiesenen Privilegien für andere Container-Instanzen oder die zu startende Containerinstanz haben Einfluss auf das mögliche Schadensrisiko. Grund hierfür ist, dass unterschiedlich stark privilegierte Containerinstanzen auf der Laufzeitumgebung ein mit der Privilegierung korrelierendes Schadenspotential aufweisen.

Weiterhin ist es oft der Fall, dass Containerinstanzen beispielsweise aus Performance- oder Lizenz-Gründen nicht vollumfänglich mit der gleichen Konfiguration ausgestattet werden sollen, sondern ausschließlich diejenigen Containerinstanzen mit Hilfe zusätzlicher Maßnahmen innerhalb der Containerinstanz geschützt werden sollen, welche zu kritischen Bereichen hin exponiert sind und somit besonders schützenswert sind.

### Zusammenfassung der Erfindung

Es ist somit eine Aufgabe der vorliegenden Erfindung, ein Verfahren zu schaffen, mit dem die Konfiguration von Containerinstanzen flexibel an das Sicherheitsrisiko, das durch die auf der Ausführungsumgebung bereits ausgeführten anderen Containerinstanzen oder sonstigen Sicherheitsmaßnahmen vorhanden ist, angepasst werden kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Computer-implementiertes Verfahren zur Umgebungsspezifischen Konfiguration einer Containerinstanz. In einer zentrale Verwaltungsvorrichtung, die Laufzeitumgebungen auf einem Cluster aus Gastrechnern verwaltet, werden die folgenden Schritte durchgeführt:
- Empfangen einer Bereitstellungskonfiguration für die Containerinstanz, die Laufzeitumgebungsparameter abhängige Konfigurationsabschnitte umfasst.

Beim Start einer Containerinstanz, die aus der Bereitstellungskonfiguration und einem zugeordneten Containerimage auf einer Laufzeitumgebung in einem ersten Gast-rechner des Clusters erstellt wird:
- Ermitteln einer aktuellen Umgebungs-Laufzeitkonfiguration, die abhängig von allen weiteren Containerinstanzen, die bereits auf dem ersten Gastrechner und/oder auf einem der anderen Gastrechnern des Clusters ausgeführt werden, ausgebildet ist und/oder abhängig von Umgebungseinstellungen des Clusters ausgebildet ist,
- Ermitteln von mindestens einem Satz an resultierenden Laufzeitumgebungsparametern durch Abgleich der aktuellen Laufzeitkonfiguration mit einer Umgebungsrichtlinie,
- Erzeugen einer aktualisierten Bereitstellungsinformation durch aktualisieren der Bereitstellungsinformation abhängig von dem resultierenden Laufzeitumgebungsparametersatz. Durch den ersten Gastrechner werden von die Konfigurationsabschnitte der Containerinstanz entsprechend der aktualisierten Bereitstellungsinformation aktiviert.

Somit werden die Konfigurationen von anderen Containerinstanzen und sonstiger Sicherheitsmaßnahmen, die bereits auf der Ausführungsumgebung ausgeführt werden in die Konfiguration der betrachteten Containerinstanz einbezogen. Somit können abhängig vom aktuellen Sicherheitsrisiko, gezielt Konfigurationsabschnitte in der betrachteten Containerinstanz aktiviert werden, und somit die Ressourcen des Gastrechners bzw. der gesamten Ausführungsumgebung optional eingesetzt werden. Die Umgebungsrichtlinie kann Regeln vorgeben, die abhängig von der im Container ausgeführten Anwendung, abhängig vom Containerinstanztyp oder auch abhängig von der Verwaltungsvorrichtung bzw. dem verwalteten Cluster sind.

Die Ausführungsumgebung umfasst die Laufzeitumgebung des Gastrechners, auf dem die Containerinstanz ausgeführt wird, die Laufzeitumgebungen der anderen Gastrechner des Clusters sowie Umgebungseinstellungen zwischen Container-implementierten Applikationen, wie beispielsweise Konfigurationen von Firewalls.

In einer vorteilhaften Ausführungsform werden lediglich eine Teilmenge der Laufzeitumgebungsparameter beim Ermitteln des mindestens einen resultierenden Laufzeitumgebungsparametersatzes berücksichtigt.

Somit kann flexibel der Umfang der Anpassung der Containerinstanz an beispielsweise den Containerinstanztyp oder den Ort der Ausführung der Containerinstanz angepasst werden.

In einer vorteilhaften Ausführungsform wird die aktuellen Laufzeitkonfiguration durch Abfragen der Laufzeitkonfiguration des ersten Gastrechners ermittelt.

Somit können die Laufzeitkonfigurationen anderer Containerinstanzen, die zur Laufzeit der gestarteten Containerinstanz auf dem gleichen, d.h., dem ersten Gastrechner ausgeführt werden bei der Laufzeitkonfiguration der gestarteten Containerinstanz berücksichtigt werden. Beispielsweise kann ein privilegierter Zugriff durch eine andere Containerinstanz auf eine Ressource des ersten Gastrechners bei der Konfiguration der gestarteten Containerinstanz berücksichtigt werden.

In einer vorteilhaften Ausführungsform wird die aktuellen Laufzeitkonfiguration durch Abfragen einer Konfigurationsdatenbank, die die Laufzeitkonfiguration innerhalb des Clusters von Gastrechnern ermittelt.

Somit werden auch die Konfigurationen der Containerinstanzen die auf den verschiedenen Gastrechnern, die von der zentralen Verwaltungsvorrichtung verwaltet werden, in den Abgleich mit der Umgebungsrichtlinie und somit in die Konfiguration der gestarteten Containerinstanz berücksichtigt.

In einer vorteilhaften Ausführungsform wird die aktuellen Laufzeitkonfiguration durch Abfragen eines Metadatendienstes, der die Umgebungseinstellungen des Clusters enthält, insbesondere von einer Zugangssteuerungseinheit in der zentralen Verwaltungsvorrichtung ermittelt.

Somit können Umgebungseinstellungen von außerhalb des Clusters betriebenen Komponenten und/oder Systemen, wie beispielsweise eine oder mehrere Firewalls zum Schutz eines Datenaustausches zwischen in verschiedenen Containerinstanzen ausgeführten Anwendungen, oder Absicherungsmaßnahmen der Gastrechner im Cluster bei der Konfiguration der Laufzeit für die aktuell gestartete Containerinstanz berücksichtigt werden.

In einer vorteilhaften Ausführungsform werden mindestens eine Operation zum Abgleich der aktuellen Laufzeitkonfiguration mit unterschiedlichen Laufzeitumgebungs-parametern aus einer Richtlinien-Bibliothek abgerufen.

Somit wird ein "Werkzeugkasten" der Verwaltungsvorrichtung vorgegeben und kann somit effizient und konsistent für alle im Cluster auszuführenden Containerinstanzen vorgegeben.

In einer vorteilhaften Ausführungsform wird der resultierende Laufzeitumgebungsparametersatz für alle Containerinstanzen eines Containerinstanz-Typs, die aus dem gleichen zugeordneten Containerimage erstellt werden, verwendet.

Somit können bereits ausgeführte Containerinstanzen des gleichen Containerinstanztyps effizient in Bezug auf Prozessorkapazität in der Verwaltungsvorrichtung aktualisiert werden und somit auf die aktuell vorliegende ermittelten Umgebungs-Laufzeitumgebung angepasst werden.

In einer vorteilhaften Ausführungsform enthält die aktualisierte Bereitstellungskonfiguration eine Kennung zum Identifizieren des resultierenden Laufzeitumgebungsparametersatzes, wenn der resultierende Laufzeitumgebungsparametersatz für Containerinstanzen mit unterschiedlichen Containerinstanz-Typen verwendet wird.

Dies erlaubt einen flexiblen Einsatz des gleichen Laufzeitumgebungsparametersatzes für unterschiedliche Containerinstanztypen.

In einer vorteilhaften Ausführungsform wird beim Start einer Containerinstanz eines neuen Instanztyps der resultierende Laufzeitumgebungsparametersatz der bereits ausgeführten Containerinstanztypen neu ermittelt, und sämtlichen Containerinstanzen der bereits ausgeführten Containerinstanztypen zugewiesen wird.

Somit können auch die ausgeführten Containerinstanzen eines bereits vorhandenen Containerinstanztyps an die geänderte Umgebungssituation, die durch das Starten der Containerinstanz des neuen Containerinstanztyps verursacht wurde, angepasst werden.

In einer vorteilhaften Ausführungsform wird der resultierende Laufzeitumgebungsparametersatz in vorgegebenen Abständen und/oder abhängig von vorgegebenen Ereignissen neu ermittelt.

Somit können Einstellungen im Cluster, über die die Verwaltungsvorrichtung nicht aktiv informiert wird, validiert und mit der Umgebungsrichtlinie abgeglichen werden.

Gemäß einem zweiten Aspekt betrifft die Erfindung ein System umfassend eine zentrale Verwaltungsvorrichtung, die Laufzeitumgebungen auf einem Cluster aus Gastrechnern verwaltet, die ausgebildet ist zum
- Empfangen einer Bereitstellungskonfiguration für die Containerinstanz, die Laufzeitumgebungsparameter abhängige Konfigurationsabschnitte umfasst,
   beim Start einer Containerinstanz, die aus der Bereitstellungskonfiguration und einem zugeordneten Containerimage auf einer Laufzeitumgebung in einem ersten Gastrechner des Clusters erstellt wird:
- Ermitteln einer aktuellen Umgebungs-Laufzeitkonfiguration, die abhängig von allen weiteren Containerinstanzen, die bereits auf dem ersten Gastrechner und/oder auf einem der anderen Gastrechnern des Clusters ausgeführt werden, ausgebildet ist und/oder abhängig von Umgebungseinstellungen des Clusters ausge-bildet ist,
- Ermitteln von mindestens einem Satz an resultierenden Laufzeitumgebungsparametern durch Abgleich der aktuellen Laufzeitkonfiguration mit einer Umgebungs-richtlinie,
- Erzeugen einer aktualisierten Bereitstellungsinformation durch aktualisieren der Bereitstellungsinformation abhängig von dem resultierenden Laufzeitumgebungsparametersatz, und
einen ersten Gastrechner, der ausgebildet ist zum
- Aktivieren von Konfigurationsabschnitten der Containerinstanz entsprechend der aktualisierten Bereitstellungsinformation.

Das System ermöglicht eine Anpassung der Containerinstanz an die vorliegenden Umgebungseinstellungen im Cluster, insbesondere in Bezug auf Sicherheitsaspekte, die durch die Umgebungsrichtlinie vorgegeben werden.

In einer vorteilhaften Ausführungsform umfasst die Verwaltungsvorrichtung eine Zugangssteuerungseinheit, die derart konfiguriert ist, die aktuelle Laufzeitkonfiguration durch Abfragen eines Metadatendienstes, die die Umgebungseinstellungen des Clusters enthält, zu ermitteln.

Gemäß einem dritten Aspekt betrifft die Erfindung eine Verwaltungsvorrichtung, die Laufzeitumgebungen auf einem Cluster aus Gastrechnern verwaltet, und ausgebildet ist zum
- Empfangen einer Bereitstellungskonfiguration für die Containerinstanz, die Laufzeitumgebungsparameter abhängige Konfigurationsabschnitte umfasst,
   beim Start einer Containerinstanz, die aus der Bereitstellungskonfiguration und einem zugeordneten Containerimage auf einer Laufzeitumgebung in einem ersten Gastrechner des Clusters erstellt wird:
- Ermitteln einer aktuellen Umgebungs-Laufzeitkonfiguration, die abhängig von allen weiteren Containerinstanzen, die bereits auf dem ersten Gastrechner und/oder auf einem der anderen Gastrechnern des Clusters ausgeführt werden, ausgebildet ist und/oder abhängig von Umgebungseinstellungen des Clusters ausgebildet ist,
- Ermitteln von mindestens einem Satz an resultierenden Laufzeitumgebungs-parametern durch Abgleich der aktuellen Laufzeitkonfiguration mit einer Umgebungs-richtlinie,
- Erzeugen einer aktualisierten Bereitstellungsinformation durch aktualisieren der Bereitstellungsinformation abhängig von dem resultierenden Laufzeitumgebungsparametersatz,
die einen ersten Gastrechner veranlasst zum
- Aktivieren von Konfigurationsabschnitten der Containerinstanz entsprechend der aktualisierten Bereitstellungsinformation.

Gemäß einem vierten Aspekt betrifft die Erfindung ein Computerprogrammprodukt, umfassend ein nicht flüchtiges computer-lesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

### Exemplarische Ausführungsbeispiele der Zeichnung

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine erstes Ausführungsbeispiel des erfindungsgemäßen Verfahrens als Ablaufdiagramm;
- Fig. 2: eine Ausführungsbeispiel des erfindungsgemäßen Systems in schematischer Darstellung;
- Fig. 3: ein Zustandsdiagramm einer Zugangskontrolleinheit, die in einer Verwaltungsvorrichtung des erfindungsgemäßen Systems angeordnet ist, als Flussdiagramm; und
- Fig. 4: ein zweites Ausführungsbeispiel des erfindungsgemäßen Verfahrens als Sequenzdiagramm.

Einander entsprechende Teile sind in allen Figuren mit den gleichen Bezugszeichen versehen.

Sofern es in der nachfolgenden Beschreibung nicht anders angegeben ist, beziehen sich die Begriffe "empfangen", "ermitteln", "einbringen", "aktivieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vor-liegen können, beispielsweise als elektrische Impulse.

Das System und darin optional enthaltene Komponenten, wie beispielsweise ein Gastrechner bzw. die auf dem Gastrechner implementierte Container-Laufzeitumgebung, die Verwaltungsvorrichtung, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

### Detaillierte Beschreibung der Ausführungsbeispiele

Unabhängig vom grammatikalischen Geschlecht eines bestimmten Begriffes sind Personen mit männlicher, weiblicher oder anderer Geschlechteridentität mit umfasst.

### Hintergrund

Containerinstanzen werden mit Hilfe von einer Bereitstellungsinformation, z.B. dem Docker-Compose Yaml oder der Kubernetes Deployment-Konfiguration (auch Kubernetes-Manifest genannt) oder einem Helm-Chart beschrieben. Hierin werden mindestens ein Containerimage referenziert, Prozess-Privilegien der Instanz zugeordnet und im Falle einer Orchestrierungslösung Kubernetes auch applikationsspezifische Konfigurationseinstellungen mit Hilfe sogenannter ConfigMaps zugewiesen.

### Beschreibung der Erfindung

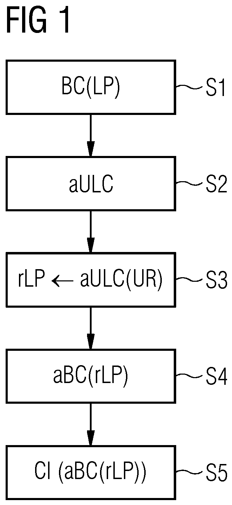

Um die Konfiguration von Containerinstanzen flexibel an ein Sicherheitsrisiko anzupassen, das durch bereits ausgeführten anderen Containerinstanzen oder sonstigen Sicherheitsmaßnahmen auf der Ausführungsumgebung vorhanden ist, wird ein Computer-implementiertes Verfahren zur Umgebungsspezifischen Konfiguration einer Containerinstanz wie in Fig. 1 dargestellt und nachfolgend beschrieben vorgeschlagen.

Im Weiteren wird der Begriff Bereitstellungsinformation verwendet und umfasst Informationen zur Softwarekomponente, insbesondere Information zum Containerimage und der Laufzeitkonfiguration zum Betreiben der Softwarekomponente. Eine zentrale Verwaltungsvorrichtung kann beispielsweise ein Computer mit einer Verwaltungs-funktion zum Starten, Verwalten und Beenden von Containerinstanzen auf einem Cluster bestehend aus einem oder mehreren Gastrechner, sein.

Die zentrale Verwaltungsvorrichtung empfängt im ersten Schritt S1 eine Bereitstellungskonfiguration BC für eine Containerinstanz, die Laufzeitumgebungsparameter LP abhängige Konfigurationsabschnitte umfasst, empfangen. Die Bereitstellungsinformation BC umfasst ein Containerimage, oder eine Referenz, mit deren Hilfe das Containerimage von einem Repositorium abgerufen wird.

Beim Start der Containerinstanz, die aus der Bereitstellungskonfiguration und einem zugeordneten Containerimage auf einer Laufzeitumgebung in einem ersten Gastrechner des Clusters erstellt wird, wird in einem zweiten Schritt S2 von der Verwaltungsvorrichtung eine aktuelle Umgebungs-Laufzeitkonfiguration aULC ermittelt.

Die aktuelle Umgebungs-Laufzeitkonfiguration aULC wird durch alle weiteren Containerinstanzen, die bereits auf dem ersten Gastrechner und/oder auf einem der anderen Gastrechnern des Clusters ausgeführt werden, bestimmt. In die aktuelle Umgebungs-Laufzeitkonfiguration aULC gehen auch Umgebungseinstellungen des Clusters, wie beispielsweise Sicherheitsmaßnahmen zum Schutz der Gastrechnern vor Angriffe Dritter oder Einstellungen für eine sichere Datenkommunikation zwischen den Gastrechnern und/oder der Verwaltungsvorrichtung ein. Der Schritte S1 kann auch nach Schritt 2 ausgeführt werden.

Anschließend, siehe S3, wird mindestens ein Satz an resultierenden Laufzeitumgebungsparametern rLP ermittelt, indem die aktuelle Laufzeitkonfiguration mit einer Umgebungsrichtlinie UR abgeglichen wird. Den Abgleich führt die Verwaltungsvorrichtung durch. Es werden alle Laufzeitumgebungsparameter oder lediglich eine Teilmenge der Laufzeitumgebungsparameter beim Ermitteln des mindestens einen resultierenden Laufzeitumgebungsparametersatzes berücksichtigt. Die Bereitstellungsinformation wird abhängig von dem resultierenden Satz von Laufzeitumgebungsparameter aktualisiert, siehe S4 und an den Gastrechner übermittelt. Die Konfigurationsabschnitte der gestarteten Containerinstanz CI werden abhängig von dem resultierenden Laufzeitumgebungsparametersatz rLP im Gastrechner aktiviert.

Zusammengefasst gleicht die zentrale Verwaltungsvorrichtung für eine zu startende Containerinstanz eine aktuelle Laufzeitkonfiguration anderer Containerinstanzen CI und des eigenen Clusters gegen eine Umgebungsrichtlinie UR ab. Das Ergebnis des Abgleiches liefert einen Satz von einem oder mehreren Laufzeitumgebungsparametern, die während des Startvorgangs in eine aktualisierte Bereitstellungskonfiguration aBC, der Container-Instanz injiziert werden. Von einer in der Container-Instanz betriebenen Applikation werden diese Laufzeitumgebungsparameter rLP verarbeitet, sodass unterschiedliche Konfigurationsabschnitte der Applikation aktiviert oder deaktiviert werden oder beispielsweise entsprechende Überwachungsprozesse gestartet o.ä. gestartet werden. Die aktualisierte Bereitstellungskonfiguration aBC wird anschließend an die Verwaltungsvorrichtung 10 übergeben und bevorzugt in der Konfigurationsdatei 13 abgespeichert.

Beim Start einer Containerinstanz eines neuen Containerinstanztyps wird der resultierende Laufzeitumgebungsparametersatz der bereits ausgeführten Containerinstanztypen neu ermittelt und sämtlichen Containerinstanzen der bereits ausgeführten Containerinstanztypen zugewiesen. Optional, wird der resultierende Laufzeitumgebungsparametersatz in vorgegebenen zeitlichen Abständen und/oder ab-hängig von vorgegebenen Ereignissen neu ermittelt.

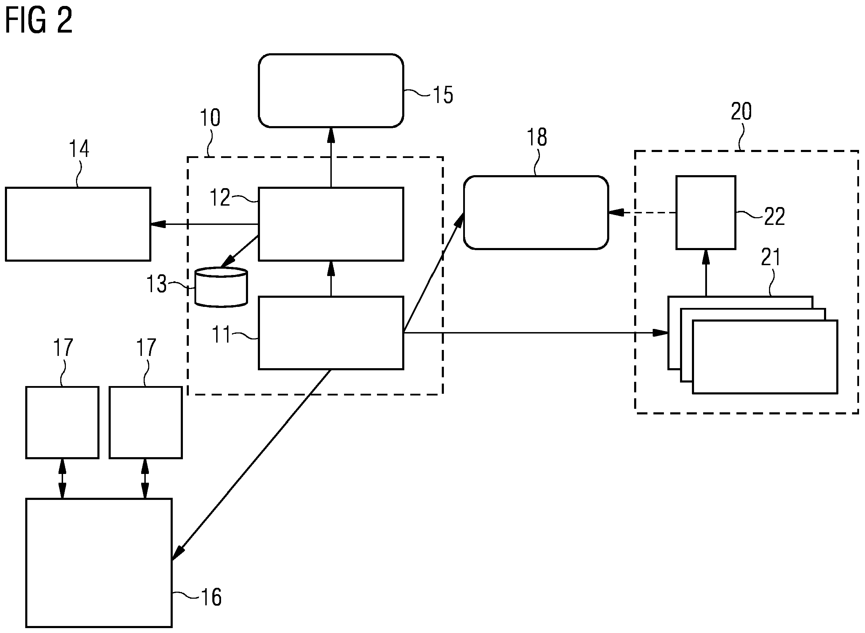

Fig. 2 zeigt ein Ausführungsbeispiel eines Systems, das derart ausgebildet ist, das beschriebene Verfahren auszuführen. Das System umfasst eine Verwaltungsvorrichtung 10 sowie einen oder mehrere Gastrechner 20, der von der Verwaltungsvorrichtung 10 gesteuert und verwaltet wird. Die Verwaltungsvorrichtung 10 umfasst eine Zugangssteuerungseinheit 12, die die Umgebungseinstellungen des Clusters ermittelt. Die Verwaltungsvorrichtung 10 umfasst eine Konfigurationsdatenbank 13 auf der die Laufzeitkonfigurationen auf jedem der Gastrechner 20 innerhalb des Clusters verfügbar sind, insbesondere abgespeichert sind. Das System umfasst einen Metadatendienst 14, der auf einem Bestandseinheit, auch asset respository, implementiert ist. Der Metadatendienst ist beispielsweise ein von einem Cloud-Provider bereitgestellter Dienst, bei welchem innerhalb der Cloud-Infrastruktur mit Hilfe entsprechender Zugriffsberechtigungen Informationen über die Topologie, die verwendeten Komponenten und deren Konfiguration abgefragt werden kann. Solche Metadaten-Dienste können prinzipiell auch außerhalb von Cloud-Provider-Infrastruktur in IT- und OT-Umgebungen bereitgestellt werden und ebenfalls Informationen über die Infrastruktur bereitstellen.

Das System umfasst des Weiteren eine Richtliniendatenbank 15, auf der mindestens eine Umgebungsrichtlinie UR und/oder mindestens eine Umgebungsrichtliniensegment abgespeichert sind. Die Umgebungsrichtlinie UR umfasst ein oder mehrere Umgebungsrichtliniensegmente. Auf jedem der Gastrechner 20 sind eine oder mehrere Laufzeitumgebungen 21 ausgebildet, auf der eine oder mehrere Containerinstanz/en 22 ausgeführt werden.

Die Verwaltungsvorrichtung 10 ermittelt durch Abfrage des Metadatendienst 14 die Umgebungseinstellungen des Clusters, insbesondere die zusätzlich zum Cluster betriebenen Komponenten wie Firewalls und ähnliche Sicherheitseinrichtungen und deren Einstellungen. Die Verwaltungsvorrichtung 10 umfasst eine Schnittstelle zu einem Containerimage-Repositorium 16, über die die Verwaltungsvorrichtung 10 ein per Referenz in der Bereitstellungskonfiguration BC angegebenes Containerimage 17 abruft. Die Verwaltungseinheit 11 umfasst des Weiteren eine Client-Schnittstelle auf der die Laufzeitumgebungsparameter 18, rLP an die Laufzeitumgebung 21 auf dem Gastrechner 20 übermittelt werden.

Die Konfigurationsdatenbank 13, die Bestandseinheit mit dem Metadatendienst 14, sowie die Richtliniendatenbank 15 können jeweils als integrierter Bestandteil der Verwaltungsvorrichtung 10 ausgebildet sein oder abgesetzt von der Verwaltungsvorrichtung 10 einzeln oder miteinander kombiniert ausgebildet sein. Das System umfasst mindestens einen, bevorzugt eine Vielzahl von Prozessoren, die die Funktionen der einzelnen Einheiten ausführen.

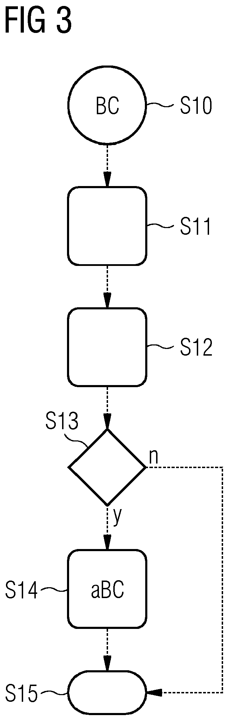

Fig.3 zeigt ein Zustandsdiagramm der Zugangssteuerungseinheit 12 zur Ermittlung der Umgebungs-Laufzeitkonfiguration, dem Abgleich mit der Umgebungsrichtlinie und dem Einbringen des resultierenden Laufzeitumgebungsparametersatzes für eine Kubernetes-basierte Laufzeitumgebung.

Die Zugangssteuerungseinheit 12 befindet sich nach Erhalt der Bereitstellungs-konfiguration BC für die zu startende Containerinstanz in einem Startzustand S10. Die Verwaltungseinheit 12 erzeugt ein Datenobjekt, beispielsweise ein in Kubernetes bekanntes Zugangs-Review-Objekt, das die Bereitstellungsinformation BC enthält. Zusätzlich kann das Datenobjekt Informationen über die abzugleichenden Laufzeitumgebungsparameter enthalten. Wird die Anzahl der unterstützten Laufzeitumgebungsparameter nicht spezifiziert, werden alle in der Umgebungsrichtlinie UR genannten Laufzeitumgebungsparameter überprüft und abgeglichen. Die Umgebungsrichtlinie UR ist beispielsweise in der Open Policy Agent-Sprache Rego definiert.

Um weitere Informationen über die Laufzeitkonfiguration und die Einstellungen des Clusters zu erhalten, fragt die Zugangssteuerungseinheit 12 die aktuelle Umgebungs-Laufzeitkonfiguration ab. Die aktuelle Laufzeitumgebung eines ersten Gastrechners sowie der Gastrechner innerhalb des Clusters wird durch Abfragen der Konfigurationsdatenbank 13 ermittelt und mit der Umgebungsrichtlinie UR abgeglichen, siehe Zustand S11. Dies kann im Falle von Kubernetes beispielsweise über Service-Accounts mit entsprechenden Berechtigungen an einem API-Server erfolgen. Der Abgleich mit dem Zugangs-Review-Objekt kann erfolgen, indem die anzuwendenden Funktionen ausgeführt werden und während der Validierung entsprechende API-Calls ausgeführt werden. Annahme ist hierbei, dass die Zugangssteuerungseinheit 12 von der Verwaltungseinheit 11 korrekte Informationen erhält und somit der Verwaltungseinheit 11 vertraut werden kann.

Um weitere umgebungsspezifische Informationen zu erhalten, wird der Metadatendienst 14 bzw. das Asset-Repository abgefragt, welcher Informationen über die Absicherung der Verwaltungsvorrichtung 10 und der verwalteten Gastrechner 20 bereitstellt, siehe S12. Der Zugriff wird der Zugangssteuerungseinheit 12 bei diesem Anwendungsbeispiel mit Hilfe entsprechender Identity Access Manager-Berechtigungen erlaubt. Durch Zugangssteuerungseinheit 12 wird abgefragt, ob die einzelnen Gastrechner 20 vom Internet erreichbar sind, zu welchen Netzen die Verwaltungsvorrichtung 10 exponiert ist oder ob bestimmte Sicherheitskomponenten wie beispielsweise eine Web Application Firewall im Einsatz sind. Die Zugangssteuerungseinheit 12 fragt über eine Beschreibungssprache die einzelnen Aspekte zum Ermitteln der Laufzeitumgebungs-parametern und/oder mindestens eine Operation zum Abgleich der aktuellen Laufzeitkonfiguration mit unterschiedlichen Laufzeitumgebungsparametern auf der Richtliniendatenbank 15 ab.

Im Zustand S13 wird abhängig von dem Abgleich der aktuellen Umgebungs-Laufzeitkonfiguration in S11 und S12 ermittelt, ob eine Änderung der Bereitstellungskonfiguration BC erforderlich ist. Ist eine Anpassung notwendig, wird im Zustand S14 eine Containerinstanz-spezifische aktualisierte Bereitstellungskonfiguration mit den entsprechenden Parametern definiert, und ausgegeben. Der Prozess ist damit abgeschlossen und die Zugangssteuerungseinheit 12 geht in eine "Ende"- Zustand über, siehe S15. Ist keine Anpassung notwendig, ist der Prozess abgeschlossen und die Zugangssteuerungseinheit 12 geht direkt in den "Ende"- Zustand über, siehe S15.

Beim Anwendungsbeispiel Kubernetes kann zur Definition der Containerinstanz-spezifischen aktualisierten Bereitstellungskonfiguration beispielsweise eine ConfigMap verwendet werden, welche die innerhalb der Containerinstanz betriebene Anwendung entsprechend konfiguriert. Entsprechende alternative Formate können der Bereitstellungskonfiguration BC, die für das Erzeugen der Containerinstanz verwendet wird, spezifiziert werden. Statt der ConfigMap können entsprechende Variablen über die Containerinstanz injiziert werden. Beim Verwenden einer ConfigMap wird angenommen, dass für jeden Containerinstanztyp eine eigene ConfigMap verwendet wird und nicht die gleiche ConfigMap über unterschiedliche Containerinstanztypen geteilt wird. Sollen unterschiedliche Containerinstanztypen die gleiche ConfigMap verwenden, muss dies in der der aktualisierten Bereitstellungskonfiguration aBC beispielsweise über eine Kennung zum Identifizieren des resultierenden Laufzeitumgebungsparametersatzes definiert werden. Containerinstanzen, die aus dem gleichen Containerimage generiert werden, sind vom gleichen Containerinstanztyp.

In einem bevorzugten Ausführungsbeispiel wird bei jedem Start eines anderen Containerinstanztyps die ConfigMap für die Containerinstanzen der bereits vorhandenen Containertypen neu berechnet wird und diese neu berechnete ConfigMap sämtlichen Containerinstanzen der bereits vorhandenen Containertypen zugewiesen. Dies ist notwendig, um gegenseitig die Laufzeitkonfiguration zu bewerten. Ändert sich die ConfigMap durch den Start neuer Instanz-Typen, wird diese wie auf Fig. 3 beschrieben, erneut überschrieben.

Bei Lösungen wie Kubernetes kann beispielsweise mit Hilfe des Mutating Webhooks erkannt werden, ob sich eine Ressource ändert. Hierdurch ist es möglich, dass durch die Verwaltungsvorrichtung 10 erkannt werden kann, welche ConfigMaps sich ändern und welche Containerinstanzen hiervon betroffen sind. Innerhalb der Bereitstellungskonfiguration für die Containerinstanzen kann definiert werden, ob beispielsweise bei der Änderung einer ConfigMap ein entsprechendes Signal an die betroffenen Containerinstanzen gesendet werden soll und somit die Bereitstellungskonfiguration innerhalb der Containerinstanz neu eingelesen werden soll. Optional kann die Containerinstanzen beispielsweise mit Hilfe des Rolling Update-Verfahrens neu gestartet werden.

Bei der Verwendung von Variablen werden die Variablen in der Verwaltungsvorrichtung 10 für jede Containerinstanz persistiert. Hierdurch erkennt die Verwaltungsvorrichtung Änderungen der Werte und weist diese auf die gleiche Weise den betroffenen Instanzen zu.

In einem Ausführungsbeispiel wird von der Verwaltungsvorrichtung definiert, dass innerhalb des Clusters beim Einspielen einer neuen Bereitstellungskonfiguration auf dem Cluster global die Umgebungsrichtlinie validiert wird und/oder eine zyklische Überprüfung durchgeführt wird. Eine zyklische Überprüfung hat den Vorteil, dass auch Einstellungen wie beispielsweise Änderungen der im Metadaten-Service hinterlegten Daten, über die Verwaltungsvorrichtung bzw. die Gastrechner im Cluster nicht aktiv informiert wird, immer wieder validiert werden. Entsprechende Zeitintervalle können hierbei Cluster-weit oder auch für jede Containerinstanz innerhalb deren Bereitstellungsinformation definiert werden. Welche Werte vorrangig verwendet werden, kann innerhalb des Clusters definiert werden.

Optional wird für bestimmte Containerinstanzen eine Neubewertung der Umgebungslaufzeitkonfiguration durchgeführt, wenn ein neuer Containerinstanztyp mit bestimmten vorgegebenen Eigenschaften erzeugt wird. Solche Eigenschaften sind Prozess-Privilegien, bestimmte Labels oder eine Zugehörigkeit zu einem bestimmten Namespace. Diese Eigenschaften können beliebig miteinander kombiniert werden und auch durch die Verwendung regulärer Ausdrücke referenziert werden.

Wird eine Bereitstellungskonfiguration einer bestimmten Containerinstanz oder eines Containerinstanztyps gelöscht, wird die zugehörige ConfigMap ebenfalls gelöscht, sofern diese nicht noch von anderen Instanzen referenziert wird. Gleiches gilt für die beschriebene Variante bei der Verwendung von Umgebungsvariablen.

Wird statt Kubernetes eine alternative Orchestrierungs-Software verwendet, welche keine ConfigMaps unterstützt, können die ermittelten Parameter ebenfalls als Umgebungsparameter übergeben werden. Wird beispielsweise Docker-Compose verwendet, werden die Konfigurationseinstellungen in einem wohldefinierten Format von einer Verwaltungseinheit in eine Datei geschrieben oder entsprechende Docker-Compose-Environment-Dateien erzeugt, die den jeweiligen Containerinstanzen beim Start zugewiesen werden.

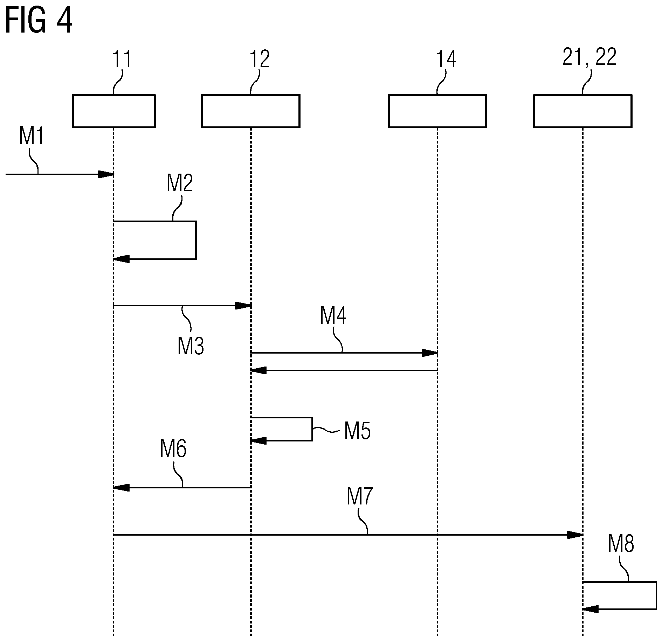

Ein Start einer Containerinstanz und eine Zuweisung von durch den Abgleich mit der Umgebungsrichtlinie ermittelten Eigenschaften ist als Sequenzdiagramm in Fig. 4 dargestellt. Die ausführenden Komponenten sind entsprechend dem in Fig.2 dargestellten Systems bezeichnet.

Eine Bereitstellungskonfiguration für eine Containerinstanz wird von der Verwaltungseinheit 11 der zentralen Verwaltungsvorrichtung 10 empfangen, siehe M1. Die Bereitstellungsinformation wird in der Verwaltungseinheit 11 aufbereitet, beispielsweise. ein Zugangs-Review-Objekt erzeugt, siehe M2. Die Bereitstellungsinformation bzw. das Zugangs-Review-Objekt wird an die Zugangssteuerungseinheit 12 zur Ermittlung einer aktuellen Laufzeitkonfiguration durch Abfragen der Laufzeitkonfiguration des ersten Gastrechners sowie der Laufzeitkonfiguration innerhalb des Clusters von Gastrechnern, die beispielsweise von der Konfigurationsdatenbank 13 der Verwaltungsvorrichtung 10 bereitgestellt wird, übermittelt, siehe M3. Die Zugangssteuerungseinheit 12 fragt Umgebungseinstellungen des Clusters beim Metadatendienst 14 ab, siehe M4 und ermittelt die resultierende Laufzeitumgebungsparameter, beispielsweise die ConfigMap, durch Abgleich mit der Umgebungsrichtlinie, siehe M5.

Die Zugangssteuerungseinheit 12 übermittelt die resultierende Laufzeitumgebungs-parameter zur Erzeugung der aktualisierten Bereitstellungskonfiguration an die Verwaltungseinheit 11, siehe M6. Die Verwaltungseinheit 11 übermittelt die die aktualisierte Bereitstellungskonfiguration an den ersten Gastrechner 21, siehe M7 der eine Containerinstanz 22 entsprechend der Bereitstellungsinformation erzeugt bzw. aktualisiert, siehe M8.

Durch das beschriebene Verfahren und System sind bestimmte Zustände, die die Verwaltungsvorrichtung annehmen kann für den Ersteller des Containerimages bekannt, wodurch dieser seine innerhalb der Containerinstanz betriebene Applikation z.B. durch die Verwendung von Konfigurationsdirektiven oder die Auswertung der Zustände innerhalb der Instanz entsprechend schützen kann. Die Zustände der Verwaltungsvorrichtung repräsentieren Sicherheitseigenschaften, welche andere Containerinstanzen oder die Laufzeitumgebung und/oder die Verwaltungsvorrichtung erfüllen. Sicherheitseigenschaften können einmalig beim Start der Containerinstanz bestimmt werden oder zyklisch bzw beim Start weiterer Instanzen revalidiert werden.

Umgebungsspezifische Informationen über im Einsatz befindliche Sicherheits-komponenten außerhalb der Laufzeitumgebung kann ein externer Dienst der Zugangssteuerungseinheit bereitstellen. Die Übergabe der ermittelten Sicherheitseigenschaften kann mit Hilfe von ConfigMaps, durch die Änderung von in persistenten Volumes abgelegten Dateien oder durch die Verwendung von Umgebungsvariablen erfolgen.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computer-implementiertes Verfahren zur Umgebungsspezifischen Konfiguration einer Containerinstanz (CI), umfassend die Schritte:
durchgeführt von einer zentrale Verwaltungsvorrichtung (10), die Laufzeitumgebungen auf einem Cluster aus mindestens einem Gastrechner (20) verwaltet,
- Empfangen (S1) einer Bereitstellungskonfiguration (BC) für die Containerinstanz (CI), die Laufzeitumgebungsparameter (LP) abhängige Konfigurationsabschnitte umfasst,
beim Start der Containerinstanz (CI), die aus der Bereitstellungskonfiguration (BC) und einem zugeordneten Containerimage auf einer Laufzeitumgebung (21) in einem ersten Gastrechner des Clusters erstellt wird:
- Ermitteln (S2) einer aktuellen Umgebungs-Laufzeitkonfiguration (aULC), die abhängig von allen weiteren Containerinstanzen, die bereits auf dem ersten Gastrechner und/oder auf einem der anderen Gastrechnern des Clusters ausgeführt werden, ausgebildet ist und/oder abhängig von Umgebungseinstellungen des Clusters ausgebildet ist,
- Ermitteln (S3) von mindestens einem Satz an resultierenden Laufzeitumgebungsparametern (rLP) durch Abgleich der aktuellen Umgebungs-Laufzeitkonfiguration (aULC) mit einer Umgebungsrichtlinie (UR),
- Erzeugen (S4) einer aktualisierten Bereitstellungsinformation (aBC) durch aktualisieren der Bereitstellungsinformation (BC) abhängig von dem resultierenden Laufzeitumgebungsparametersatz (rLP),
durch den ersten Gastrechner,
- Aktivieren (S5) von Konfigurationsabschnitten der Containerinstanz (CI) entsprechend der aktualisierten Bereitstellungsinformation (aBC).

2. Computer-implementiertes Verfahren nach Anspruch 1, wobei lediglich eine Teilmenge der Laufzeitumgebungsparameter (LP) beim Ermitteln des mindestens einen resultierenden Laufzeitumgebungsparametersatzes (rLP) berücksichtigt wer-den.

3. Computer-implementiertes Verfahren nach einem der vorangehenden Ansprüche, wobei die aktuelle Umgebungs-Laufzeitkonfiguration (aULC) durch Abfragen der Laufzeit-konfiguration des ersten Gastrechners ermittelt wird.

4. Computer-implementiertes Verfahren nach einem der vorangehenden Ansprüche, wobei die aktuelle Umgebungs-Laufzeitkonfiguration (aULC) durch Abfragen einer Konfigurationsdatenbank (13), die die Laufzeitkonfiguration innerhalb des Clusters von Gastrechnern ermittelt wird.

5. Computer-implementiertes Verfahren nach einem der vorangehenden Ansprüche, wobei die aktuelle Umgebungs-Laufzeitkonfiguration (aULC) durch Abfragen eines Metadatendienstes (14), die die Umgebungseinstellungen des Clusters enthält, ermittelt wird.

6. Computer-implementiertes Verfahren nach einem der vorangehenden Ansprüche, wobei mindestens eine Operation zum Ab-gleich der aktuellen Umgebungs-Laufzeitkonfiguration (aULC) mit unterschiedlichen Laufzeitumgebungsparametern aus einer Richtliniendatenbank (15) abgerufen werden.

7. Computer-implementiertes Verfahren nach einem der vorangehenden Ansprüche, wobei der resultierende Laufzeitumgebungsparametersatz (rLP) für alle Containerinstanzen eines Containerinstanztyps, die aus dem gleichen zugeordneten Containerimage erstellt werden, verwendet wird.

8. Computer-implentiertes Verfahren nach einem der Ansprüche 1-6, wobei die aktualisierte Bereitstellungskonfiguration (aBC) eine Kennung zum Identifizieren des resultierenden Laufzeitumgebungsparametersatzes (rLP) enthält, wenn der resultierende Laufzeitumgebungsparametersatz (rLP) für Containerinstanzen mit unterschiedlichen Containerinstanztypen verwendet wird.

9. Computer-implementiertes Verfahren nach einem der vorangehenden Ansprüche, wobei beim Start einer Containerinstanz eines neuen Containerinstanztyps der resultierende Laufzeitumgebungsparametersatz (rLP) der bereits ausgeführten Containerinstanztypen neu ermittelt wird, und sämtlichen Containerinstanzen der bereits ausgeführten Containerinstanztypen zugewiesen wird.

10. Computer-implementiertes Verfahren nach einem der vorangehenden Ansprüche, wobei der resultierende Laufzeitumgebungsparametersatz (rLP) in vorgegebenen Abständen und/oder abhängig von vorgegebenen Ereignissen neu ermit-telt wird.

11. System umfassend
eine zentrale Verwaltungsvorrichtung (20), die Laufzeitumgebungen auf einem Cluster aus mindestens einem Gastrechner (20) verwaltet, die ausgebildet ist zum
- Empfangen (S1) einer Bereitstellungskonfiguration (BC) für die Containerinstanz (CI), die Laufzeitumgebungsparameter (LP) abhängige Konfigurationsabschnitte umfasst,
beim Start der Containerinstanz (CI), die aus der Bereitstellungskonfiguration (BC) und einem zugeordneten Containerimage auf einer Laufzeitumgebung in einem ersten Gast-rechner des Clusters erstellt wird:
Ermitteln (S2) einer aktuellen Umgebungs-Laufzeitkonfiguration (aULC), die abhängig von allen weiteren Containerinstanzen, die bereits auf dem ersten Gastrechner und/oder auf einem der anderen Gastrechnern des Clusters ausgeführt werden, ausgebildet ist und/oder abhängig von
- Ermitteln (S3) von mindestens einem Satz an resultierenden Laufzeitumgebungsparametern (rLP) durch Abgleich der aktuellen Umgebungs-Laufzeitkonfiguration (aULC) mit einer Umgebungsrichtlinie (UR),
- Erzeugen (S4) einer aktualisierten Bereitstellungsinformation (aBC) durch Aktualisieren der Bereitstellungsinformation (BC) abhängig von dem resultierenden Laufzeitumgebungsparametersatz (rLP),
einen ersten Gastrechner, der ausgebildet ist zum
- Aktivieren (S5) von Konfigurationsabschnitten der Containerinstanz (CI) entsprechend der aktualisierten Bereitstellungsinformation (aBC).

12. System nach Anspruch 11, umfassend eine Zugangssteuerungseinheit, die derart konfiguriert ist, die aktuelle Umgebungs-Laufzeitkonfiguration (aULC) durch Abfragen eines Metadatendienstes (14), die die Umgebungseinstellungen des Clusters enthält, zu ermitteln.

13. Verwaltungsvorrichtung (20), die Laufzeitumgebungen auf einem Cluster aus Gastrechnern verwaltet, die ausgebildet ist zum
- Empfangen (S1) einer Bereitstellungskonfiguration (BC) für die Containerinstanz (CI), die Laufzeitumgebungsparameter (LP) abhängige Konfigurationsabschnitte umfasst,
beim Start der Containerinstanz (CI), die aus der Bereitstellungskonfiguration (BC) und einem zugeordneten Containerimage auf einer Laufzeitumgebung (21) in einem ersten Gastrechner des Clusters erstellt wird:
- Ermitteln (S2) einer aktuellen Umgebungs-Laufzeitkonfiguration (aULC), die abhängig von allen weiteren Containerinstanzen, die bereits auf dem ersten Gastrechner und/oder auf einem der anderen Gastrechnern des Clusters ausgeführt werden, ausgebildet ist und/oder abhängig von Umgebungseinstellungen des Clusters ausge-bildet ist,
- Ermitteln (S3) von mindestens einem Satz an resultierenden Laufzeitumgebungsparametern (rLP) durch Abgleich der aktuellen Umgebungs-Laufzeitkonfiguration (aULC) mit einer Umgebungsrichtlinie (UR),
- Erzeugen (S4) einer aktualisierten Bereitstellungsinformation (aBC) durch aktualisieren der Bereitstellungsinformation (BC) abhängig von dem resultierenden Laufzeitumgebungsparametersatz (rLP),
die einen ersten Gastrechner veranlasst zum
- Aktivieren (S5) von Konfigurationsabschnitten der Containerinstanz (CI) entsprechend der aktualisierten Bereitstellungsinformation (aBC).

14. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens nach einem der Ansprüche 1 bis 10 durchzuführen.
